Europäisches Patentamt

(19) European Patent Office

Office européen des brevets

(11) Publication number: **0 071 223**
**A1**

(12) **EUROPEAN PATENT APPLICATION**

(21) Application number: **82106722.0**

(22) Date of filing: **24.07.82**

(51) Int. Cl.³: **C 08 F 2/00**
**C 23 F 15/00**

(30) Priority: **27.07.81 US 287334**

(43) Date of publication of application:
**09.02.83 Bulletin 83/6**

(84) Designated Contracting States:
**BE DE FR GB IT NL**

(71) Applicant: **The B.F. GOODRICH Company**
**Dept. 0015 WHB-6 500 South Main Street**
**Akron, Ohio 44318(US)**

(72) Inventor: **Cohen, Louis**
**32106 Lake Road**
**Avon Lake Ohio 44012(US)**

(74) Representative: **von Kreisler, Alek, Dipl.-Chem. et al,**
**Deichmannhaus am Hauptbahnhof**
**D-5000 Köln 1(DE)**

(54) Internally coated reaction vessel for use in suspension polymerization of vinyl monomers.

(57) The invention relates to substantially eliminating the polymer buildup on the internal surfaces of a polymerization reactor wherein a suspension polymerization system is employed in producing polymers from polymerizable ethylenically unsaturated monomers or vinyl monomers. The internal surfaces are coated with a heavy coating of an acidic coating material, such as a self-condensed polyhydric phenol, dissolved in an organic solvent, such as an alcohol, and then drying the coating prior to charging the reaction ingredients into the reactor. Multiple charges can be run without opening the reactor. By "heavy coating" is meant one that is substantially thicker, or heavier, than a thin, or monolayer, coating that is presently employed in the suspension polymerization art.

EP 0 071 223 A1

-1-

"INTERNALLY COATED REACTION VESSEL
FOR USE IN SUSPENSION POLYMERIZATION
OF VINYL MONOMERS"

BACKGROUND OF THE INVENTION

Various type chemical processes are commonly carried out in large, stirred vessels which are frequently provided with auxiliary equipment, such as baffles, heat transfer coils which enable heat to be supplied or extracted from the contents of the vessels, and the like. In many cases, however, such processes eventually produce undesirable deposits on the surfaces of the equipment in which the reaction mixtures come into contact. Such deposits interfere with the efficient transfer of heat to and from the interior of the vessels. Further, these deposits have a tendency to deteriorate and to partially fragment resulting in contamination of the reaction mixture and the products produced therefrom. This problem is particularly prevalent in polymerization type reactions, since the deposits, or "buildup", of solid polymer on reactor surfaces, not only interferes with heat transfer, but decreases productivity and adversely affects polymer quality.

This problem is particularly bad in the commercial production of polymers and copolymers of vinyl and vinylidene halides, when polymerized alone or with other vinylidene monomers having a terminal $CH_2 = C <$ group, or with polymerizable polyolefinic moners. For example, in the commercial production of vinyl chloride polymers, the same are usually produced in the form of discrete particles by polymerization in aqueous suspension systems. When employing such a polymerization system, the vinyl chloride, and other comonomers when used, are maintained in the form of small discrete droplets by the use of suspending agents and agitation.

When the reaction is complete, the resultant polymer is washed and dried. These aqueous suspension system polymerization reactions are usually conducted under pressure in metal reactors equipped with baffles and high-speed agitators. However, these suspension systems are usually unstable and during the polymerization reaction, vinyl chloride polymer builds up on the interior surfaces of the polymerization reactor, including the surfaces of the baffles and agitator. Obviously, this polymer buildup must be removed since it results in further formation of polymer buildup which, in turn, results in a crust that adversely affects heat transfer and contaminates the polymer being produced.

Various materials have heretofore been employed in coating solutions with which the internal surfaces of the polymerization reactor are coated in order to substantially reduce or eliminate polymer buildup thereon. These materials all do an acceptable job, but there is still room for improvement in the area of undesirable polymer buildup, particularly in view of present day Governmental regulations.

SUMMARY OF THE INVENTION

It has been found that polymer buildup on the interior surfaces of a polymerization reactor, wherein a suspension polymerization system is employed, can be substantially eliminated. This is accomplished by coating all the interior surfaces of the reactor with a heavy coating of an acid form or unneutralized coating material, such as a self-condensed polyhydric phenol, dissolved in an organic solvent, such as alcohol, and drying the coating prior to introducing the reaction ingredients into the reactor. Due to the nature of the coating solution or composition, it can be applied to the inner surfaces of the reactor without

-3-

opening the same, thus providing a closed polymerization system. By "heavy coating" is meant one that is substantially thicker, or heavier, than a thin, or monolayer, coating that is presently used in the art.

### DETAILED DESCRIPTION

In accordance with the present invention, a heavy film or coating of a coating material, as hereinafter defined and described, is applied to the interior surfaces of a polymerization reactor or vessel by merely contacting said surfaces with an organic solvent solution of said coating material. Likewise, all exposed surfaces in the interior of the reactor, such as the baffles, agitator or mixing mechanism, the condenser when one is employed, and the like, are also treated in like manner. After the organic solvent solution of the coating material has been applied to the interior surfaces, the heavy film or coating thereon is dried. Any suitable means may be employed for drying the coating, such as by flushing the reactor with hot air or steam to sweep the organic solvent vapors out, by heating the reactor surfaces by circulating hot water through the jacket surrounding the reactor, and the like. The organic solvent vapors can be sent to a recover system or they can be vented to the atmosphere. After the coating has been dried, the suspension polymerization medium is charged into the reactor and the reaction started. The heavy film or coating is not substantially affected by the polymerization medium even though vigorously agitated during the polymerization reaction.

A number of various coating materials may be employed in making the coating solutions which are useful in practicing the process of the instant invention. Among these materials are (1) the self-condensation product of a polyhydric phenol, (2) the condensation product of two or more polyhydric phenols, and (3) the self-condensation product of a polyhydric naphthol. The polyhydric phenols used in making the condensation products are resorcinol, hydroquinone, catechol and phloroglucinol. These coating materials, and the method of making the same, are shown in U. S. Patent No. 4,080,173, issued March 21, 1978, to Cohen.

Another class of coating materials that may be employed herein are the oligomers that are derived from reacting the above condensed polyhydric phenols and polyhydric naphthols with a chlorine containing bleach, such as sodium hypochlorite, for example. These coating materials are shown in U. S. Patent No. 4,228,130, issued October 14, 1980, to Cohen.

Another class of coating materials that may be used in the present invention are the reaction products or oligomers of (1) an alkyl or halogen substituted phenol, such as p-chlorophenol, and the like, (2) a condensing agent, such as formaldehyde, and the like, and (3) a polyhydric phenol, such as resorcinol, and the like. These coating materials are shown and described in U. S. Patent No. 4,200,712, issued April 29, 1980, to Cohen.

Another class of coating materials that may be employed in the present invention are the reaction products of a thiodiphenol, or a derivation thereof, with a bleaching agent, such as, for example, sodium hypochlorite (NaOcl). These coating materials are shown and described in co-pending U. S. Patent Application Serial No. 161,711, filed June 23, 1980, in the name of Cohen.

Among the solvents that may be used in making the coating solutions of the present invention, there may be named the saturated alcohols containing from 1 to 8 carbon atoms, such as methanol, ethanol, isopropanol, butanol, hexanol, 2-ethyl hexanol, and the like, acetates, such as ethyl acetate, butyl acetate, and the like, ketones containing from 1 to 8 carbon atoms, such as methyl ethyl ketone, acetone, and the like, aldehydes containing from 1 to 8 carbon atoms, such as acetaldehyde, and the like, tetrahydrofuran, etc.

The coating solutions of the present invention are made by conventional methods, using heat and agitation where necessary, Usually a temperature in the range of about $5^{\circ}$C. to about $40^{\circ}$C. is satisfactory. Agitation during dissolution is desirable. The concentration of the coating material in the coating solution will be in the range of about 1% to about 10% by weight, and preferably, in the range of about 3% to about 7% by weight. The molecular weight of the coating material has an effect on the concentration of said material in the coating solution or the total solids content of said solution. Since the molecular weight of the coating material affects the total solids content of the coating solution, the concentration of the coating material therein could, in certain instances, be greater than 10% by weight.

Unlike the thin or monolayer coating normally used in a suspension polymerization system, particularly where the color of the coating material presents problems, such as specks in the polymer being produced, a sufficient amount of heavy coating solution is painted or brushed on the reactor surfaces, or sprayed on, and dried there in order for an effective film or coating to form. Spraying of the coating solution onto the reactor surfaces is preferred, when the viscosity of said solution is such that it can be conveniently sprayed, since it is the most practical and economical method of application. The thickness of the coating on the reactor surfaces is set by the concentration of the coating material in the coating solution, the quantity of coating solution used, and the degree of run-off before the coating dries in place. The excess coating solution that runs off can be recovered and reused, or it can be disposed of by usual methods, depending upon the amount that runs off prior to complete drying. It should be pointed out, however, that the degree of run-off is low since the drying cycle is relatively short, that is, for example, in reactors having a capacity of 3,000 gallons or more, the drying cycle will be in the range of about one minute to about ten minutes. Usually with most coating solutions used in the present invention, the drying time will be about two minutes or less.

As pointed out hereinabove, various factors affect the thickness of the coating on the reactor surfaces, such as concentration of the coating material in the coating solution. Usually, the thickness of the film or coating will be in the range of about 0.1 micron to about 10.0 microns, and preferably, in the range of about 0.5 microns to about 3.0 microns. In general, the coating should not be too thick due to the increased intensity of the color thereof with the increased thickness. However, in the present invention, the coatings are tough and water-insoluble and the danger of the film or coating flaking off during the suspension polymerization reaction is practically zero so that the color contamination of the polymer problem is not all that great. The thickness of the coatings of the present invention are in quite a contrast with the invisible, absorbed monolayer films used heretofore in suspension polymerization systems. For example, in the monolayer films or coatings, the average film thickness can be as low as 25 $\overset{o}{A}$ which is 1/1000 as thick as a 2.5 micron film.

-7-

The heavy coatings of the present invention work equally well on glass or metal surfaces, such as stainless steel, ferroplate, and the like.

While no special cleaning of said surfaces is necessary prior to application of the coating solution, it has been found that the most satisfactory results are obtained when the surfaces are first cleaned prior to coating. The surfaces can be cleaned with chromic acid, etc., or with an abrasive cleaner, such as Ajax® and the like, and then rinsed with water and dried prior to application of the coating solution. High-pressure water cleaning of the surfaces can also be used. Starting with clean surfaces enhances the adhesion of the coating thereto.

In the present invention, multiple polymerizations can be run without opening the reactor between charges. In addition, multiple charges can be run without recoating the internal surfaces of the reactor after each charge. As a practical matter, the surfaces are recoated when the reactor is shut down routinely for servicing. However, the internal surfaces of the reactor can be recoated after each charge, if desired, to insure uniform and efficient production. As previously pointed out, it is preferred to use spray nozzles in applying the coating solution to the inner surfaces of the reactor since, with this method, said surfaces are more easily reached in the least amount of time which in turn reduces the amount of run-off of the coating solution. When recoating the reactor, the reactor is drained, and the inner surfaces are flushed with water, that is, using a high-pressure stream of water in order to remove any polymer buildup that might have occurred and present a clean surface, when dried, for recoating. Using the spray nozzles, these steps can be accomplished without reopening the reactor. This process can be repeated after each charge or periodically after a certain number of charges, depending upon one's production schedule and the down-time allotted to each reactor. It is understood, of course, that one can recoat the reactor as often as desired without opening the same, even after every charge is polymerized, thus preventing the escape of unreacted monomers(s) to the atmosphere of the plant.

For the purpose of simplicity of description, the invention is described in conjunction with the suspension polymerization of vinyl chloride. It is understood, of course, that this is merely intended in an illustrative and not a limitative sense.

While the present invention is specifically illustrated with regard to the suspension polymerization of vinyl chloride, it is understood that the process and apparatus may likewise be applied in the suspension polymerization of any polymerizable ethylenically unsaturated monomer or monomers where undesirable polymer buildup occurs. Examples of such monomers are other vinyl halides and vinylidene halides, such as vinyl bromide, vinylidene chloride, etc; vinylidene monomers having at least one terminal $CH_2\!=\!C\!<$ grouping, such as acrylic acid, methacrylic acid, and the like; esters of acrylic acid, for example, methyl acrylate, ethyl acrylate, butyl acrylate, octyl acrylate, cyanoethyl acrylate, and the like; esters of methacrylic acid, such as methyl methacrylate, butyl methacrylate, and the like; vinyl acetate; acrylonitrile; styrene and styrene derivatives including α-methyl styrene, vinyl toluene, chlorostyrene; vinyl naphthalene; diolefins including butadiene, isoprene, and the like; and mixtures of any of these types of monomers and other vinylidene monomers copolymerizable therewith; and other vinylidene monomers of the types known to those skilled in the art.

The present invention, however, is particularly applicable to the suspension polymerization of vinyl chloride, either alone or in a mixture with one or more other vinylidene monomers having at least one terminal $CH_2= C<$ grouping copolymerizable therewith in amounts as great as about 80% or more, by weight, based on the weight of the monomer mixture, since polymer buildup in the reaction vessel is a bad problem here.

The polymerization process is usually conducted at a temperature in the range of about $0^{\circ}C$. to about $100^{\circ}C$. depending upon the particular monomer or monomers being polymerized. However, it is preferred to employ temperatures in the range of about $40^{\circ}C$. to about $70^{\circ}C$., since, at these temperatures, polymers having the most beneficial properties are produced. The time of the polymerization reaction will vary from about 2 to 15 hours.

The polymerization process may be carried out at autogenous pressures although superatmospheric pressures of up to 10 atmospheres or more may be employed with some advantage with the more volatile monomers. Superatmospheric pressures may also be employed with those monomers having the requisite volatilities at reaction temperatures permitting reflux cooling of the reaction mixture.

Further, the polymerization process may be carried out utilizing a full reactor technique. That is, the reaction vessel is completely filled with the polymerization medium and kept that way throughout the reaction by constant addition thereto of water of additional makeup liquid containing the monomer or monomers in the same proportions as at start-up. Upon the addition of a certain predetermined amount of liquid, the polymerization reaction is terminated, usually by the addition thereto of a short-stopping agent. The necessity for the addition of liquid is due to the shrinkage in volume of the reaction medium produced by the conversion of the monomer or monomers to the polymeric state.

In order to rate the various coatings, there has been devised a rating scale with respect to "paper" and "sandy" buildup. An uncoated reactor, where normal amounts of both types of buildup occur, is given a rating of 1.5. Any rating below 1.0 is good or a definite improvement. In other words, 0.0 rating is perfect, and so on.

To further illustrate the present invention, the following specific examples are given. In the examples, all parts and percents are by weight unless otherwise indicated.

## EXAMPLE I

In this example, several different coating materials were evaluated and compared to a control where no coating was employed. The type coating, the organic solvent, the coating solution concentration, and the dried coating thickness are set forth in the table that follows hereinafter. In each case, except the control stainless steel panels measuring 1/32" x 1/2" x 2-1/2" were employed. The coatings were brushed on the panels and then dried at 90°C. for a period of two minutes. Thereafter, the panels were fastened to the baffles in 3 liter polymerization reactors. Then the following recipe was charged to each reactor:

Vinyl chloride..................... 1000 gms

Water (demineralized).............. 2055 gms

88% hydrolyzed polyvinyl acetate... 0.5 gm

Di-secondary butyl peroxdicarbonate 0.5 cc

A full reactor was used in the polymerizations, sufficient water being added to keep the reactor full. The reaction temperature was maintained at 57°C. and the

-11-

reaction medium was agitated throughout. The water was added during the reaction as the mixture shrank because of formation of polymer. Upon the addition of 400 grams of water, the reaction was discontinued. The contents of each reactor was then removed in usual fashion. Without recoating the reactor, a second charge was made and polymerized in the same manner. After the second charge was polymerized and removed from the reactor, a third charge was polymerized using the same procedure. Upon completion of the third charge, the surfaces of the stainless steel panels were classified in accordance with the aforementioned procedure for rating reactor surfaces. The polymer buildup results, along with the coating materials and solvents employed, are given in the following table:

TABLE 1

| TYPE COATING | COATING THICKNESS | BUILDUP AFTER 3 CHARGES | |
| --- | --- | --- | --- |
| | | PAPER | SANDY |
| 1. None (Control) | - | 1.5 | 1.5 |
| 2. Self-condensed resorcinol - 5% in ethanol. | 2.3 microns | 0.0 | 0.0 |
| 3. Self-condensed resorcinol reacted with NaOCl - 4% in ethanol. | 1.0 micron | 0.0 | 0.0 |
| 4. Reaction product of p-chlorophenol, formaldehyde and resorcinol - 10% in methanol. | 1.7 microns | 0.0 | 0.0 |
| 5. Reaction product of 4,4'-thiodiphenol and NaOcl - 5% in methanol. | 0.8 micron | 0.0 | 0.2 |

The superior results obtained using the coating materials of the present invention in acid form in suspensionpolymerization systems are clearly evident from the above data.

One of the principal advantages of the present invention is that multiple charges can be run in a reactor without recoating the same. Further, besides practically eliminating polymer buildup, the present invention enables one to operate a closed polymerization system which, in the case of vinyl chloride polymerization, has the advantage of reducing drastically the parts per million of vinyl chloride in the atmosphere of the plant. Numerous other advantages of the present invention will be apparent to those skilled in the art.

While the present invention has been described in terms of its specific embodiments, certain modifications and equivalents will be apparent to those skilled in the art, and are intended to be included within the scope of the present invention, which is to be limited only by the scope of the appended claims.

0071223

-13-

CLAIMS

1. A process for substantially eliminating the buildup of polymers on the internal surfaces of a polymerization reaction vessel for use in suspension polymerization systems which comprises applying to said surfaces a coating solution comprised of an organic solvent having dissolved therein an acidic coating material selected from the group consisting of (1) the self-condensation product of a polyhydric phenol, (2) the condensation product of two or more polyhydric phenols, (3) the self-condensation product of a polyhydric naphthol, (4) the condensation product of any one of (1), (2), and (3) reacted with a chlorine containing bleach, (5) the reaction products of an alkyl or halogen substituted phenol, a condensing agent, and a polyhydric phenol, and (6) the reaction product of a thiodiphenol, or derivative thereof, with a chlorine containing bleaching agent, drying said coating solution on said surfaces to produce a coating thereon having a thickness in the range of about 0.1 micron to about 10 microns, and polymerizing one or more ethylenically unsaturated monomers while in contact with said coating.

2. A process as defined in claim 1 wherein the polymerizable ethylenically unsaturated monomer is vinyl chloride.

3. A process as defined in claim 1 wherein the solvent is methanol.

4. A process as defined in claim 1 wherein the solvent is ethanol.

5. A process as defined in claim 1 wherein the solvent is isopropanol.

6. A process as defined in claim 1 wherein the solvent is ethyl acetate.

7. A process as defined in claim 1 wherein the coating solution contains from about 1.0% to about 10.0% by weight of said acidic coating material.

8. A process as defined in claim 1 wherein the polyhydric phenol is selected from the group consisting of resorcinol, hydroquinone, catechol, and phloroglucinol.

9. A process as defined in claim 1 wherein the polymerizable ethylenically unsaturated monomers are vinyl chloride and vinyl acetate.

10. A process as defined in claim 7 wherein the polymerizable ethylenically unsaturated monomer is vinyl chloride.

11. A process as defined in claim 10 wherein the acidic coating material is self-condensed resorcinol.

12. A process as defined in claim 10 wherein the acidic coating material is self-condensed resorcinol reacted with NaOCl.

13. A process as defined in claim 10 wherein the acidic coating material is the reaction product of p-chlorophenol, formaldehyde and resorcinol.

14. A process as defined in claim 10 wherein the acidic coating material is the reaction product of 4,4'-thiodiphenol and NaOCl.

15. A process as defined in claim 10 wherein the organic solvent is methanol.

16. A process as defined in claim 10 wherein the organic solvent is ethanol.

**0071223**

Application number

EP 82 10 6722

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| D,A | US-A-4 080 173 (GOODRICH COMPANY) *Claim 1* | 1 | C 08 F 2/00 C 23 F 15/00 |
| X | CHEMICAL ABSTRACTS, vol. 93, no. 14, October 1980, page 20, col. 1, no. 133077x, Columbus Ohio (USA); & JP - A - 80 54 305 (KANEGAFUCHI CHEMICAL INDUSTRY CO., LTD.) (21-04-1980) *Abstract* | 1,2 | |

TECHNICAL FIELDS SEARCHED (Int. Cl. ³)

C 08 F
C 23 F

The present search report has been drawn up for all claims

| Place of search THE HAGUE | Date of completion of the search 24-11-1982 | Examiner BOLETTI C.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82